# FASCICULE DE BREVET EUROPEEN

(11) **EP 0 656 267 B1**
(45) Date de publication et mention de la délivrance du brevet: **29.04.1998**
(21) Numéro de dépôt: 94402735.8
(22) Date de dépôt: 30.11.1994
(51) Int. Cl.: B60C 23/00

(54) **Roulement équipé d'un dispositif d'étanchéité pour passage de fluide**
Wälzlager mit fluiddichter Verbindungsvorrichtung
Roller bearing equipped with a fluid tight passage device

(30) Priorité: 01.12.1993 FR 9314396
(43) Date de publication de la demande: 07.06.1995
(73) Titulaire: SKF FRANCE, F-92142 Clamart Cédex (FR)
(72) Inventeur: Caillaut, Claude, F-37390 Saint-Roch (FR); Bonnin, Christophe, F-37200 Tours (FR); Houdayer, Christophe, F-37000 Tours (FR); Rigaux, Christian, F-37260 Artannes-sur-Indre (FR); Berges, Martha, F-37000 Tours (FR); Beghini, Eric, F-37100 Tours (FR); Defossez, Marc, F-37210 Parcay-Meslay (FR); Message, Olivier, F-37000 Tours (FR)
(74) Mandataire: Casalonga, Axel

(56) Documents cités:
- EP-A- 0 204 085
- EP-A- 0 362 921
- DE-A- 2 918 481
- DE-A- 3 213 552
- FR-A- 653 815
- US-A- 2 976 906
- US-A- 4 932 451

## Description

La présente invention concerne le domaine des étanchéités pour le passage d'un fluide entre deux pièces dont l'une est animée d'un mouvement de rotation par rapport à l'autre. En particulier, l'invention concerne un roulement équipé d'un passage de fluide qui traverse les bagues tournante et non tournante du roulement, ainsi qu'un dispositif d'étanchéité pour le passage du fluide au travers du roulement.

On connaît par la demande de brevet européen 0 362 921 (SKF) un roulement équipé d'un dispositif d'étanchéité monté entre deux rangées de billes et entre les orifices aménagés sur la bague extérieure et les orifices aménagés sur la bague intérieure du roulement et comprenant des lèvres d'étanchéité en contact avec la surface extérieure de la bague intérieure pour former une chambre, de façon à assurer le passage d'un fluide à travers le roulement. Ce roulement permet d'établir la communication entre deux enceintes contenant un fluide sous pression. Le dispositif d'étanchéité assure d'une part le passage du fluide à travers le roulement et d'autre part empêche te lubrifiant du roulement tel que la graisse de pénétrer dans les zones de passage du fluide dans le routement. Ce dispositif d'étanchéité présente cependant un encombrement axial important, ce qui peut être incompatible avec certaines applications.

Une application courante de cette technique est destinée au contrôle et à la régulation de la pression des pneumatiques d'un véhicule, te dispositif d'étanchéité pour passage de fluide étant monté dans les roulements de roue du véhicule.

La demande de brevet allemand n° 29 18 481 décrit un dispositif d'étanchéité non intégré à un roulement et comprenant un joint pourvu d'un canal d'amenée d'air oblique et de deux inserts métalliques, et un corps métallique coopérant avec le joint. Le montage du dispositif d'étanchéité requiert son positionnement angulaire tant par rapport à la bague extérieure que par rapport à la bague intérieure.

On connaît également d'autres dispositifs de passage d'air à travers les moyeux de roues utilisant une paire de joints d'étanchéité pour assurer le passage étanche de l'air entre les parties tournante et fixe du moyeu (voir par exemple les demandes de brevets européens 0 204 085 et 0 208 540). Chaque joint d'étanchéité comporte une armature métallique sur laquelle est surmoulée une lèvre d'étanchéité. Les joints sont solidarisés à la partie fixe du moyeu par l'intermédiaire de leur armature métallique, leurs lèvres d'étanchéité étant en contact de frottement avec une portée cylindrique aménagée sur la partie tournante du moyeu. Chaque lèvre d'étanchéité est supportée par une portion axiale du joint possédant une certaine flexibilité dans le sens radial. Ainsi, la pression exercée par le fluide sur cette portion axiale supportant la lèvre d'étanchéité se traduit par une certaine pression de contact de la lèvre d'étanchéité sur la portée cylindrique de la partie tournante en plus de la pression de contact due à la précontrainte mécanique de la lèvre d'étanchéité sur la portée cylindrique.

Cependant, la présence d'une portion axiale pour chaque joint afin de supporter sa lèvre d'étanchéité crée un encombrement axial important qui peut être incompatible avec certaines applications.

La présente invention a pour objet de remédier aux inconvénients précités des techniques existantes en proposant un roulement équipé d'un dispositif d'étanchéité efficace et présentant un encombrement axial réduit pour permettre son intégration facile dans le roulement.

Un autre objet de l'invention est de fournir un dispositif d'étanchéité au fluide traversant le roulement pour lequel la pression de contact des lèvres d'étanchéité par rapport à une portée du roulement varie dans le même sens que la pression du fluide traversant le dispositif d'étanchéité.

Le dispositif d'étanchéité est disposé entre une bague tournante et une bague non tournante d'un roulement afin d'assurer le passage d'un fluide entre lesdites bagues qui sont traversées chacune par des canaux de passage de fluide. Une chambre intermédiaire étanche de forme annulaire est ainsi formée entre les bagues tournante et non tournante du roulement et communique avec les canaux de passage de fluide desdites bagues. Le dispositif d'étanchéité est monté fixe sur l'une des bagues qui peut être tournante ou non tournante, la chambre intermédiaire se prolongeant vers l'autre bague par des parois flexibles dont la partie d'extrémité constitue une lèvre d'étanchéité qui est en contact frottant par rapport à une portée de l'autre bague du roulement.

Selon l'invention, les portées de contact frottant de l'autre bague sont des surfaces de révolution inclinées par rapport à l'axe de rotation du roulement. Les parois flexibles de la chambre intermédiaire étanche sont sensiblement parallèles aux portées de contact frottant de telle sorte que la pression de contact entre les lèvres d'étanchéité et les portées varie dans le même sens que la pression du fluide dans la chambre intermédiaire.

Les portées de contact frottant du roulement ont pour génératrices des segments de droite ou des segments de courbe. L'inclinaison desdites portées par rapport à l'axe du roulement est comprise de préférence entre 10° et 90° en vue de réduire l'étendue axiale des parois flexibles de la chambre intermédiaire étanche et des lèvres d'étanchéité du dispositif d'étanchéité.

Les lèvres d'étanchéité du dispositif d'étanchéité pourront comporter dans leur zone de frottement un revêtement présentant de meilleures caractéristiques de frottement et d'étanchéité par rapport au reste des lèvres. Le produit connu sous le nom de Téflon est tout à fait satisfaisant à cet égard. Avantageusement, les parois flexibles de la chambre intermédiaire présentent également deux lèvres extérieures secondaires d'étanchéité pour le produit lubrifiant contenu dans le roulement. Les lèvres secondaires d'étanchéité permettent de protéger les zones de frottement des lèvres d'étanchéité au fluide contre le produit lubrifiant du roulement.

L'invention sera mieux comprise à l'étude de la description détaillée de quelques modes de réalisation pris à titre nullement limitatif et illustrés par les dessins annexés, sur lesquels :
la figure 1 est une vue partielle en coupe axiale d'un roulement équipé d'un dispositif d'étanchéité selon un premier mode de réalisation de l'invention,
la figure 2 est une vue en détail similaire à la figure 1 représentant un second mode de réalisation de l'invention,
la figure 3 est une vue en détail similaire à la figure 1 représentant un troisième mode de réalisation de l'invention,
la figure 4 est une vue similaire à la figure 2 représentant un quatrième mode de réalisation de l'invention, et
la figure 5 est une vue similaire à la figure 3 représentant un cinquième mode de réalisation de l'invention.

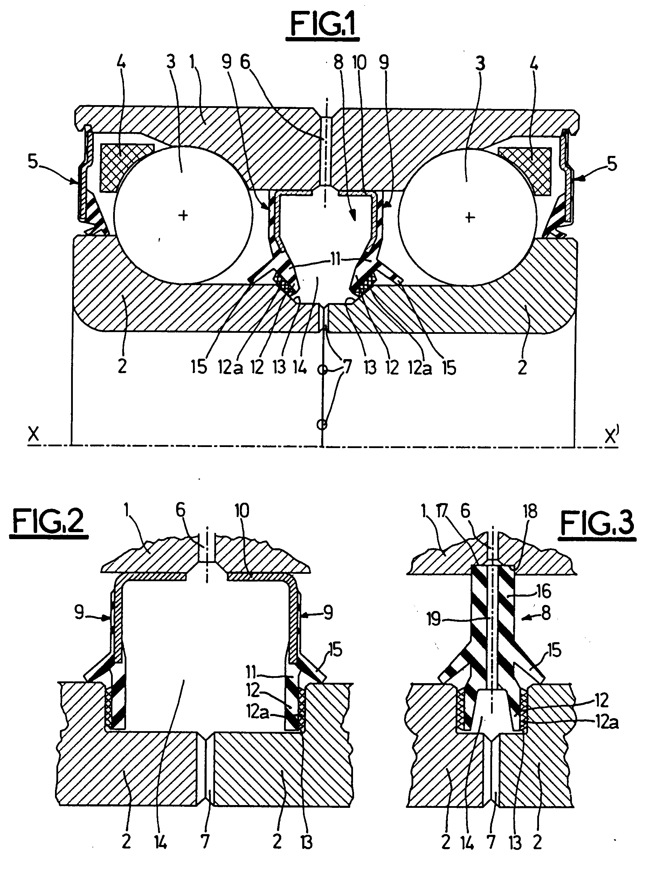

Le roulement illustré sur la figure 1 comprend une bague extérieure 1, une bague intérieure 2 formée par deux demi-bagues accolées axialement, et deux rangées de billes 3 de roulement qui sont espacées circonférentiellement par des cages 4. La bague extérieure 1 et la bague intérieure 2 peuvent être animées d'un mouvement de rotation l'une par rapport à l'autre. La bague extérieure 1 peut être fixe ou tournante.

Le roulement est protégé du milieu extérieur par deux joints d'étanchéité latéraux annulaires 5. Dans un plan radial situé entre les deux rangées de billes 3 se trouvent plusieurs canaux extérieurs radiaux 6 traversant la bague extérieure 1 du roulement, et plusieurs canaux intérieurs radiaux 7 traversant la bague intérieure 2 du roulement. Dans l'espace annulaire formé par les bagues extérieure 1 et intérieure 2 et les deux rangées de billes 3 est monté un dispositif d'étanchéité 8 permettant le passage d'un fluide entre les canaux extérieurs 6 et intérieurs 7 du roulement.

Le dispositif d'étanchéité 8 est formé dans cet exemple de deux joints séparés 9 annulaires qui sont montés en regard axialement de façon symétrique par rapport au plan radial passant par les canaux extérieurs 6 et intérieurs 7 des bagues de roulement. Chaque joint d'étanchéité 9 comprend une armature métallique surmoulée par un matériau flexible, tel qu'un élastomère. L'armature métallique est formée par une tôle d'acier pliée de façon à présenter une partie d'emmanchement axial 10 sur la bague extérieure 1 du roulement et une partie de renforcement radial pour le matériau flexible de surmoulage qui se prolonge en une paroi flexible 11 dont l'extrémité libre constitue une lèvre 12 de contact frottant sur une portée annulaire 13 aménagée sur la bague intérieure 2 du roulement. Les deux joints d'étanchéité 9 ainsi montés délimitent une chambre intermédiaire 14 annulaire pour le passage du fluide, la chambre intermédiaire 14 communiquant avec les canaux extérieurs 6 et intérieurs 7 de passage de fluide.

Comme pour les joints d'étanchéité 9, les portées de contact frottant 13 aménagées dans la bague intérieure 2 sont symétriques par rapport au plan radial passant par les canaux extérieurs 6 et intérieurs 7. Les portées 13 sont inclinées par rapport à l'axe XX' du roulement. Les parois flexibles 11 de la chambre intermédiaire 14 supportant les lèvres d'étanchéité 12 s'étendent dans une direction sensiblement parallèle aux portées 13 de contact frottant. Toute variation de pression du fluide sur les faces internes des parois flexibles 11 se traduit donc par une variation dans le même sens de la pression de contact des lèvres d'étanchéité 12 sur les portées 13. Dans l'exemple illustré, l'inclinaison des portées 13 de contact frottant est de l'ordre de 45° par rapport à l'axe XX' du roulement. Les portées sont orientées de façon convergente vers les canaux intérieurs 7 de passage de fluide.

Afin d'améliorer les caractéristiques de frottement entre les lèvres d'étanchéité 12 et les portées 13 de contact frottant, les zones de frottement des lèvres d'étanchéité 12 sont munies d'un revêtement 12a en Téflon qui présentent les caractéristiques mécaniques supérieures au caoutchouc ou élastomère constituant le reste des lèvres d'étanchéité 12. Des lèvres secondaires d'étanchéité 15 peuvent également être prévues afin de protéger les lèvres d'étanchéité 12 de la graisse de lubrification des billes 3 de roulement. Les lèvres secondaires d'étanchéité 15 peuvent être constituées par deux languettes annulaires extérieures des parois flexibles 11. Ces languettes secondaires 15 s'étendent obliquement et sont en contact frottant sur des portées cylindriques de la bague intérieure 2.

La figure 2 montre une variante de réalisation par rapport à la figure 1. Dans cet exemple, les portées de contact frottant 13 de la bague intérieure 2 sont perpendiculaires à l'axe du roulement. Les parois flexibles 11 de la chambre intermédiaire 14 s'étendent alors sensiblement radialement.

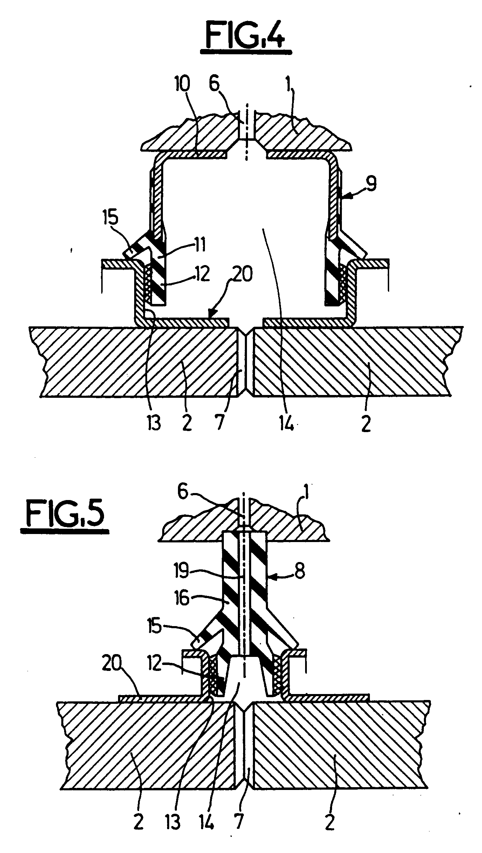

Sur la figure 3 est montrée une autre variante de l'invention pour laquelle les portées 13 sont également perpendiculaires à l'axe du roulement. Dans cet exemple, au lieu de deux joints d'étanchéité séparés, le dispositif d'étanchéité 8 comprend un corps central annulaire 16 présentant un rebord circulaire extérieur de fixation 17 encastré dans une rainure annulaire 18 aménagée au voisinage des canaux extérieurs 6 de la bague extérieure 1. Le corps central 16 présente deux lèvres intérieures d'étanchéité 12 qui définissent entre elles la chambre intermédiaire annulaire 14 communiquant avec les canaux intérieurs 7. Les zones de frottement 12a des lèvres d'étanchéité 12 sont revêtues d'une matière anti-friction telle que du Téflon. Plusieurs canaux radiaux 19 répartis circonférentiellement traversent le corps central 16 en reliant les canaux extérieurs 6 de la bague extérieure 1 et la chambre intermédiaire 14. Ainsi, le passage du fluide (l'air par exemple) entre les canaux extérieurs 6 et intérieurs 7 est assuré de façon étanche grâce à la structure particulièrement compacte du corps central annulaire 16.

Dans les trois modes de réalisation décrits précédemment, les portées de contact frottant 13 sont directement usinées sur la bague intérieure 2 du roulement. Dans le cas où la bague intérieure présente une faible épaisseur dans le sens radial, un tel usinage risque d'altérer les caractéristiques mécaniques requises pour ladite bague. Il est alors intéressant dans ce cas d'utiliser des portées de contact rapportées à la bague intérieure à l'aide des coupelles en tôle d'acier par exemple. Les figures 4 et 5 illustrent deux modes de réalisation supplémentaires qui sont équivalents aux modes de réalisation illustrés sur les figures 2 et 3. La différence significative réside dans l'utilisation d'un support métallique 20 emmanché axialement sur la bague intérieure 2 et présentant une partie s'étendant radialement qui constitue une portée de contact frottant 13 pour les lèvres d'étanchéité 12 du dispositif d'étanchéité. L'angle de pliage pour obtenir la portée 13 peut être différent de 90° pour présenter une inclinaison semblable à celle de la figure 1.

L'encombrement axial de la paroi flexible 11 (figures 1, 2 et 4) ou de la lèvre d'étanchéité 12 (figures 3 et 5) du dispositif d'étanchéité diminue de façon similaire au cosinus de l'angle de la portée 13 de contact frottant par rapport à l'axe XX' de rotation du roulement. Cet encombrement axial atteint une valeur minimale dans le cas où la portée 13 est perpendiculaire à l'axe de rotation du roulement. Grâce à l'invention, on peut donc réduire considérablement l'encombrement axial du dispositif d'étanchéité 8 au fluide tout en conservant son efficacité, puisque les parois flexibles 11 de la chambre intermédiaire 14 sont dirigées sensiblement dans la même direction que la portée de contact frottant 13, et que la pression de contact des lèvres d'étanchéité 12 sur ladite portée 13 varie dans le même sens que la pression du fluide se trouvant à l'intérieur de la chambre intermédiaire 14. Il est possible de choisir une rigidité de la paroi flexible 11 supportant les lèvres d'étanchéité 12 de telle sorte qu'une pression de contact minimale soit assurée entre la lèvre d'étanchéité 12 et la portée 13 de contact frottant même pour des pressions faibles de fluide à l'intérieur de la chambre intermédiaire 14.

## Revendications

1. Roulement comprenant une bague tournante et une bague non tournante traversées chacune par des canaux (6,7) de passage de fluide, des éléments roulants (3) entre les bagues tournante et non tournante, et un dispositif d'étanchéité (8) monté entre les bagues tournante et non tournante pour former une chambre intermédiaire étanche (14) communiquant avec les canaux (6,7) de passage de fluide, la chambre intermédiaire présentant deux parois flexibles (11) dont les parties d'extrémité libre forment deux lèvres d'étanchéité (12) en contact frottant avec une portée (13) de l'une des bagues (2) du roulement, caractérisé en ce que les portées (13) de contact frottant sont inclinées par rapport à l'axe (XX') de rotation du roulement, et que les parois flexibles (11) s'étendent sensiblement parallèlement auxdites portées de telle sorte que la pression de contact entre les lèvres d'étanchéité et les portées varie dans le même sens que la pression du fluide dans la chambre intermédiaire (14) du dispositif d'étanchéité.

2. Roulement selon la revendication 1, caractérisé en ce que les canaux de passage de fluide des bagues tournante et non tournante sont situés sensiblement dans un même plan radial qui constitue également le plan de symétrie pour le dispositif d'étanchéité.

3. Roulement selon la revendication 1 ou 2, caractérisé en ce que l'angle d'inclinaison des portées (13) de contact frottant est compris entre 10° et 90°.

4. Roulement selon la revendication 1, 2 ou 3, caractérisé en ce que les portées de contact frottant (13) sont engendrées par des génératrices en segments de droite.

5. Roulement selon la revendication 1, 2 ou 3, caractérisé en ce que les portées de contact frottant (13) sont engendrées par des génératrices en segments de courbe.

6. Roulement selon l'une des revendications précédentes, caractérisé en ce que les portées de contact frottant (13) sont obtenues par usinage direct de la bague correspondante (2) du roulement.

7. Roulement selon l'une dès revendications 1 à 5, caractérisé en ce que les portées de contact frottant (13) sont rapportées sur la bague correspondante (2) au moyen d'un support métallique (20) emmanché sur ladite bague.

8. Roulement selon l'une des revendications précédentes, caractérisé en ce qu'il présente un forme annulaire pour définir entre les bagues tournante et non tournante du roulement une chambre intermédiaire (14) étanche au fluide dont deux parois latérales flexibles (11) sont inclinées par rapport à l'axe de rotation (XX') du roulement, l'extrémité libre desdites parois flexibles constituant les lèvres d'étanchéité (12) en contact frottant avec les portées (13) du roulement.

9. Dispositif d'étanchéité selon la revendication 7 ou 8, caractérisé en ce qu'il présente deux lèvres secondaires d'étanchéité (15) en contact de frottements avec une portée cylindrique adjacente aux portées (13) de contact frottant pour protéger les lèvres d'étanchéité (12) de la graisse de lubrification des éléments roulants (3) du roulement.

10. Dispositif d'étanchéité selon l'une des revendications 7 à 9, caractérisé en ce qu'il est constitué de deux joints (9) séparés montés en regard axialement l'un de l'autre.

11. Dispositif d'étanchéité selon l'une des revendications 7 à 10, caractérisé en ce qu'il est monobloc avec un corps central (16) présente deux lèvres d'étanchéité (12) qui délimitent la chambre intermédiaire (14), le corps central étant traversé par plusieurs canaux radiaux (19) qui communiquent d'une part avec les canaux (6) de la bague (1) de fixation du dispositif et d'autre part avec la chambre intermédiaire.

## Claims

1. Rolling-contact bearing comprising a rotating race and a non-rotating race, through each one of which there pass channels (6, 7) for the passage of fluid, rolling bodies (3) between the rotating race and the non-rotating race, and a sealing device (8) mounted between the rotating race and the non-rotating race to form a sealed intermediate chamber (14) communicating with the channels (6, 7) for the passage of fluid, the intermediate chamber having two flexible walls (11), the free end parts of which form two sealing lips (12) in rubbing contact with a bearing surface (13) of one of the races (2) of the bearing, characterized in that the bearing surfaces (13) for rubbing contact are inclined with respect to the axis (XX') of rotation of the bearing, and that the flexible walls (11) extend more or less parallel to the said bearing surfaces in such a way that the contact pressure between the sealing lips and the bearing surfaces varies in the same direction as the pressure of the fluid in the intermediate chamber (14) of the sealing device.

2. Rolling-contact bearing according to Claim 1, characterized in that the channels for the passage of fluid in the rotating race and the non-rotating race are situated more or less in one and the same radial plane which also constitutes the plane of symmetry for the sealing device.

3. Rolling-contact bearing according to Claim 1 or 2, characterized in that the angle of inclination of the bearing surfaces (13) for rubbing contact is between 10° and 90°.

4. Rolling-contact bearing according to Claim 1, 2 or 3, characterized in that the bearing surfaces for rubbing contact (13) are formed by generatrices which are sections of a straight line.

5. Rolling-contact bearing according to Claim 1, 2 or 3, characterized in that the bearing surfaces for rubbing contact (13) are formed by generatrices which are sections of a curve.

6. Rolling-contact bearing according to one of the preceding claims, characterized in that the bearing surfaces for rubbing contact (13) are obtained by directly machining the corresponding race (2) of the bearing.

7. Rolling-contact bearing according to one of Claims 1 to 5, characterized in that the bearing surfaces for rubbing contact (13) are attached to the corresponding race (2) by means of a metal support (20) push-fitted onto the said race.

8. Rolling-contact bearing according to one of the preceding claims, characterized in that it has an annular shape so that it defines between the rotating race and the non-rotating race of the bearing a fluid-tight intermediate chamber (14), two flexible lateral walls (11) of which are inclined with respect to the axis of rotation (XX') of the bearing, the free end of the said flexible walls constituting the sealing lips (12) in rubbing contact with the bearing surfaces (13) of the bearing.

9. Sealing device according to Claim 7 or 8, characterized in that it has two secondary sealing lips (15) in rubbing contact with a cylindrical bearing surface adjacent to the bearing surfaces (13) for rubbing contact in order to protect the sealing lips (12) from the grease used to lubricate the rolling bodies (3) of the bearing.

10. Sealing device according to one of Claims 7 to 9, characterized in that it consists of two separate seals (9) mounted axially facing one another.

11. Sealing device according to one of Claims 7 to 10, characterized in that it is integral with a central body (16) has two sealing lips (12) which delimit the intermediate chamber (14), the central body having passing through it a number of radial channels (19) which communicate on the one hand with the channels (6) in the race (1) for securing the device and on the other hand with the intermediate chamber.

## Patentansprüche

1. Wälzlager mit einem umlaufenden Ring sowie einem stillstehenden Ring, wobei jeder von Kanälen (6,7) zur Fluidübertragung durchquert ist, mit Wälzkörpern (3) zwischen dem umlaufenden und dem stillstehenden Ring, und mit einer Dichtungsanordnung (8), die zwischen dem umlaufenden und dem stillstehenden Ring angeordnet ist, um eine abgedichtete Zwischenkammer (14) zu bilden, die mit den Kanälen (6,7) zur Fluidübertragung in Verbindung steht, wobei die Zwischenkammer zwei flexible Wände (11) aufweist, deren freie Endabschnitte zwei Dichtlippen (12) bilden, die sich in Gleitkontakt mit einer Anlagefläche (13) eines der Ringe (12) des Wälzlagers befinden, dadurch gekennzeichnet, dass die Gleitkontaktanlageflächen gegenüber der Drehachse (XX') des Wälzlagers geneigt sind und dass die flexiblen Wände (11) sich im Wesentlichen parallel zu den Anlageflächen erstrecken, derart, dass die Anlagekraft zwischen den Dichtlippen und den Anlageflächen sich in demselben Sinne verändert wie der Fluiddruck in der Zwischenkammer (14) der Dichtungsanordnung.

2. Wälzlager nach Anspruch 1, dadurch gekennzeichnet, dass die Kanäle zur Fluidübertragung in dem umlaufenden und in dem stillstehenden Ring sich im Wesentlichen in derselben Radialebene befinden, die auch die Symmetrieebene für die Dichtungseinrichtung darstellt.

3. Wälzlager nach den Ansprüchen 1 oder 2, dadurch gekennzeichnet, dass der Neigungswinkel der Gleitkontaktanlageflächen zwischen 10° und 90° beträgt.

4. Wälzlager nach den Ansprüchen 1, 2 oder 3, dadurch gekennzeichnet, dass die Gleitkontaktanlageflächen (13) durch Erzeugende mit geraden Abschnitten erzeugt sind.

5. Wälzlager nach den Ansprüchen 1, 2 oder 3, dadurch gekennzeichnet, dass die Gleitkontaktanlageflächen (13) durch Erzeugende aus gekrümmten Abschnitten erzeugt sind.

6. Wälzlager nach einem der vorhergehenden Ansprüche, dadurch gekennzeichnet, dass die Gleitkontaktanlageflächen (13) durch unmittelbare Bearbeitung des entsprechenden Ringes (2) des Wälzlagers erhalten sind.

7. Wälzlager nach einem der Ansprüche 1 bis 5, dadurch gekennzeichnet, dass die Gleitkontaktanlageflächen (13) auf dem entsprechenden Ring (2) mittels eines metallischen Trägers (20) gebildet sind, der auf den Ring aufgepresst ist.

8. Wälzlager nach einem der vorhergehenden Ansprüche, dadurch gekennzeichnet, dass es eine ringförmige Gestalt hat, um zwischen den umlaufenden und den stillstehenden Ringen des Wälzlagers eine fluiddichte Zwischenkammer (14) zu bilden, von der zwei flexible Seitenwände (11) gegenüber der Drehachse (XX') des Wälzlagers geneigt sind, wobei die freien Enden der flexiblen Wände Dichtlippen (12) bilden, die in Gleitkontakt mit den Anlageflächen (13) stehen.

9. Dichtanordnung nach einem der Ansprüche 7 oder 8, dadurch gekennzeichnet, dass sie zwei sekundäre Dichtlippen (15) aufweist, die in Gleitkontakt mit einer zylindrischen Anlagefläche stehen, die sich neben den Gleitkontaktanlageflächen (13) befindet, um die Dichtlippen (12) gegen Schmierfett der Wälzkörper (3) des Wälzlagers zu schützen.

10. Dichtanordnung nach einem der Ansprüche 7 bis 9, dadurch gekennzeichnet, dass sie zwei Dichtglieder (9) aufweist, die in axialer Richtung getrennt voneinander befestigt sind.

11. Dichtanordnung nach einem der Ansprüche 7 bis 10, dadurch gekennzeichnet, dass sie mit einem Zentralkörper (16) einstückig ist, der zwei Dichtlippen (12) aufweist, die die Zwischenkammer (14) begrenzen, wobei der Zentralkörper von mehreren radial verlaufende Kanäle (19) durchquert ist, die einerseits mit den Kanälen (6) in dem Befestigungsring der Einrichtung und andererseits mit der Zwischenkammer kommunizieren.
